# EUROPEAN PATENT APPLICATION

(11) **EP 4 546 827 A1**
(43) Date of publication of application: **30.04.2025**
(21) Application number: 24208294.9
(22) Date of filing: 23.10.2024
(51) Int. Cl.: H04W 4/40, H04B 7/00

(54) **COMMUNICATION DEVICE AND COMMUNICATION METHOD**

(30) Priority: 25.10.2023 JP 2023183568
(71) Applicant: TOYOTA JIDOSHA KABUSHIKI KAISHA, Aichi-ken, 471-8571 (JP)
(72) Inventor: KANEKO, Naoya, Toyota-shi, 471-8571 (JP); SHAO, Xiao, Toyota-shi, 471-8571 (JP); OKADA, Kazuya, Toyota-shi, 471-8571 (JP); MA, Jing, Toyota-shi, 471-8571 (JP); ASAOKA, Takuya, Toyota-shi, 471-8571 (JP)
(74) Representative: TBK

(57) **Abstract**

A communication device (30) includes an NTN communication unit (39) configured to connect to a non-terrestrial network, a sensor unit (38), and a control unit (31). The control unit (31) is configured to: acquire, via the sensor unit (38), presence information regarding a range of presence of an obstruction in space including an outgoing or incoming direction of radio waves during communication via the NTN communication unit (39); and performs a process based on a line of sight in which the radio waves are transmittable and receivable between the NTN communication unit (39) and the non-terrestrial network in the space, the line of sight being estimated from the acquired presence information.

## Description

### BACKGROUND OF THE INVENTION

### 1. Field of the Invention

The present disclosure relates to communication devices, and communication methods.

### 2. Description of Related Art

Conventionally, technology for switching wireless links for communication terminals between terrestrial base stations and satellite base stations has been considered in the art. In this technology, when in a situation where base stations in a disaster area shut down and only satellite base stations are available, the satellite base stations preferentially establish wireless links for communication terminals in the disaster area (see, for example, Japanese Unexamined Patent Application Publication No. 2022-134676 (JP 2022-134676 A)). Japanese Unexamined Patent Application Publication (Translation of PCT Application) No. 2022-545100 (JP 2022-545100 A), Japanese Unexamined Patent Application Publication No. 2006-133215 (JP 2006-133215 A), and 3GPP (registered trademark) TR 38.821 V16.2.0 (2023-03) (Release 16) disclose related art.

### SUMMARY OF THE INVENTION

However, radio stations in a non-terrestrial network (NTN) including satellite base stations and high altitude platform stations (HAPS) may be blocked by obstructions and become unavailable. Aspects of the disclosed embodiments improve the accuracy of predicting availability of radio stations in the NTN.

A first aspect of the present disclosure is exemplified by a communication device. The communication device includes an NTN communication unit configured to connect to a non-terrestrial network, a sensor unit, and a control unit. The control unit is configured to: acquire, via the sensor unit, presence information regarding a range of presence of an obstruction in space including an outgoing or incoming direction of radio waves during communication via the NTN communication unit; and performs a process based on a line of sight (LOS) in which the radio waves are transmittable and receivable between the NTN communication unit and the non-terrestrial network in the space, the LOS being estimated from the acquired presence information.

The communication device may be mounted on a moving object, and the control unit may be configured to repeatedly estimate the LOS in a time section from a current time to a future time as the moving object moves, the future time being a predetermined amount of time from the current time.

The communication device may further include a terrestrial network (TN) communication unit configured to connect to a terrestrial network. The control unit may be configured to receive location or predicted location information of an NTN radio station in the space in advance via the terrestrial network and estimate the LOS by reflecting the location or predicted location information received in advance.

The control unit may be configured to estimate the LOS based on the presence information acquired from a device that performs sensing processing or an information processing device that accumulates information collected in a past by the device.

The control unit may be configured to estimate the LOS based on information acquired from the information processing device and real-time information acquired from the device.

The control unit may be configured to switch between the communication via the NTN communication unit and communication via the TN communication unit based on the estimated LOS.

The control unit may be configured to use both the communication via the NTN communication unit and communication via the TN communication unit.

The control unit may be configured to estimate the LOS based on a rainfall condition in the space.

A second aspect of the present disclosure is exemplified by a communication system. The communication system includes: the communication device; and a non-terrestrial network.

A third aspect of the present disclosure is exemplified by a communication method. The communication method includes: acquiring, by a computer, presence information regarding a range of presence of an obstruction in space including an outgoing or incoming direction of radio waves during communication via an NTN communication unit configured to connect to a non-terrestrial network; and performing, by the computer, a process based on an LOS in which the radio waves are transmittable and receivable between the NTN communication unit and the non-terrestrial network in the space, the LOS being estimated from the acquired presence information.

The NTN communication unit may be mounted on a moving object, and the communication method may further include repeatedly estimating, by the computer, the LOS in a time section from a current time to a future time as the moving object moves, the future time being a predetermined amount of time from the current time.

The communication method may further include receiving location or predicted location information of an NTN radio station in the space in advance via a terrestrial network, and estimating the LOS by reflecting the location or predicted location information received in advance.

The communication method may further include estimating the LOS based on the presence information acquired from a device that performs sensing processing or an information processing device that accumulates information collected in a past by the device.

The estimating may include estimating the LOS based on information acquired from the information processing device and real-time information acquired from the device.

The communication method may further include switching between the communication via the NTN communication unit and communication via a TN communication unit configured to connect to the terrestrial network, based on the estimated LOS.

The communication method may further include using both the communication via the NTN communication unit and communication via a TN communication unit configured to connect to the terrestrial network.

The communication method may further include estimating the LOS based on a rainfall condition in the space.

A fourth aspect of the present disclosure is exemplified by a non-transitory storage medium storing instructions that are executable by one or more processors and that cause the one or more processors to perform functions. The functions include: acquiring presence information regarding a range of presence of an obstruction in space including an outgoing or incoming direction of radio waves during communication via an NTN communication unit configured to connect to a non-terrestrial network; and performing a process based on an LOS in which the radio waves are transmittable and receivable between the NTN communication unit and the non-terrestrial network in the space, the LOS being estimated from the acquired presence information.

The communication device can improve the accuracy of predicting the availability of radio stations in an NTN.

### BRIEF DESCRIPTION OF THE DRAWINGS

Features, advantages, and technical and industrial significance of exemplary embodiments of the present disclosure will be described below with reference to the accompanying drawings, in which like signs denote like elements, and wherein:
FIG. 1 illustrates an environment in which vehicles each equipped with a communication device of a first embodiment travel;
FIG. 2 illustrates a vehicle equipped with the communication device and a group of devices related to the communication device;
FIG. 3 illustrates configurations included in a network;
FIG. 4 illustrates an example of the configuration of the communication device;
FIG. 5 illustrates the configuration of an information processing device;
FIG. 6 illustrates a movement route for which the communication device performs line of sight (LOS) prediction and determination processes;
FIG. 7 is a flowchart illustrating a communication method that is performed by the communication device mounted on the vehicle according to the first embodiment;
FIG. 8 is a flowchart illustrating the details of the LOS prediction process;
FIG. 9 is a flowchart illustrating a process of a communication device of a second embodiment;
FIG. 10 is a flowchart illustrating a process of a communication device of a third embodiment; and
FIG. 11 is a flowchart illustrating the details of the LOS and communication quality prediction process of the third embodiment.

### DETAILED DESCRIPTION OF EMBODIMENTS

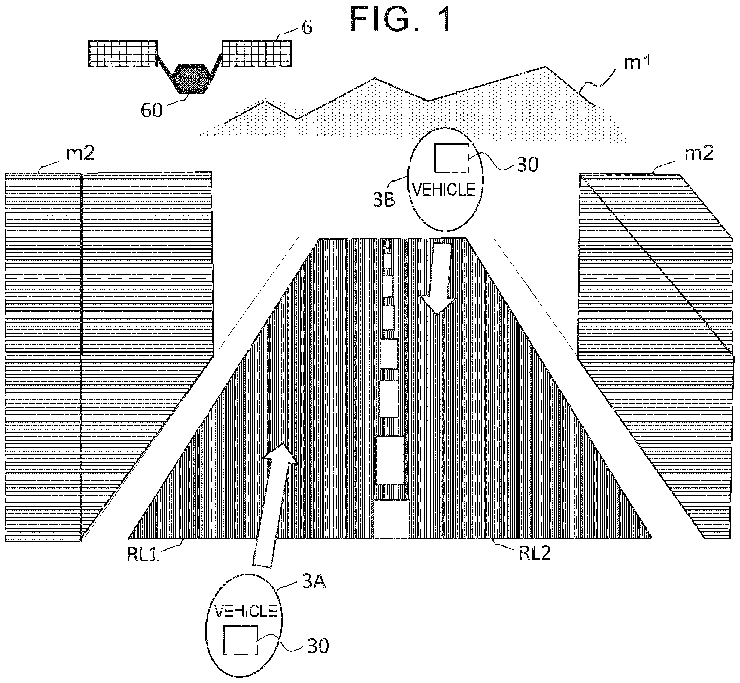

Hereinafter, a communication device 30, a communication system 100, a communication method, a non-transitory storage medium and a program according to an embodiment will be described with reference to the drawings. The communication device 30 includes an NTN communication unit 39 connectable to a non-terrestrial network, a sensor 38, and a control unit (see FIGS. 1, 2, 4, etc.). The control unit acquires, via the sensor 38, presence information regarding the range of presence of obstructions in space including an outgoing or incoming direction of radio waves during communication via the NTN communication unit 39. The control unit performs a process based on a line of sight (LOS) in which radio waves are transmittable and receivable between the NTN communication unit 39 and the non-terrestrial network in space. This LOS is estimated from the acquired presence information. An NTN radio station 6 to which the non-terrestrial network is connected is present in space including the outgoing or incoming direction of radio waves.

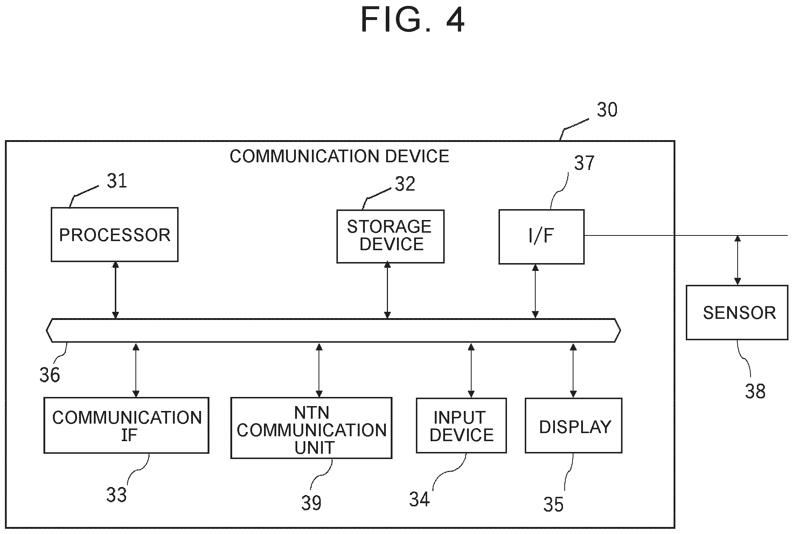

The communication device 30 is mobile by, for example, being mounted on a moving object or carried by a user. Therefore, it is expected that the presence information will change as the communication device 30 moves. Therefore, the control unit repeatedly predicts the movement route of the communication device 30 in a time section from a current time to a future time that is a predetermined period of time from the current time. The control unit acquires presence information regarding the range of presence of obstructions in the movement route of the communication device 30 in the time section until the future time. The communication device 30 may estimate the presence information by its own information processing. The communication device 30 may be provided with the presence information from an information processing device 4, database 7, etc. on a network N1 connected via the NTN communication unit 39 or a terrestrial network (TN) communication unit (communication interface (IF) 33 in FIG. 4) connectable to a terrestrial network (see FIGS. 1, 4).

### First Embodiment

### System Configuration

Hereinafter, a vehicle 3 as a moving object of a first embodiment, the communication device 30 mounted on the vehicle 3, and the communication system 100 including the communication device 30 will be described with reference to FIGS. 1 to 8. FIG. 1 illustrates an environment in which vehicles 3A, 3B each equipped with the communication device 30 of the first embodiment travel. The vehicles 3A, 3B, etc. are collectively referred to as vehicles 3. The vehicles 3 may be an autonomous vehicle. The number of vehicles 3 included in the communication system 100 may be one, or may be three or more. The moving object is not limited to a four-wheeled vehicle, but may be a two-wheeled vehicle, a bicycle, etc. The moving object may be a ship, or a flying object that is movable in space, such as what is called a drone or an aircraft. As shown in FIG. 1, the vehicle 3 as a moving object is equipped with the communication device 30 of the present embodiment.

The viewing direction toward the plane of paper of FIG. 1 is herein also referred to as direction away from the viewer. The direction opposite to the viewing direction toward the plane of paper of FIG. 1 is herein also referred to as direction toward the viewer. In FIG. 1, there is a mountain m1 in the distance in the direction away from the viewer. The vehicle 3A is traveling in a left lane RL1 of a road in the direction from the side closer to the viewer toward the side away from the viewer in the figure. The vehicle 3B is traveling in a right lane RL2 of the road in the direction from the side away from the viewer toward the side closer to the viewer in the figure.

There are obstructions m2 on both sides near the road where the vehicle 3A located on the side closer to the viewer is traveling. The obstructions m2 are not present near the road where the vehicle 3B located on the side away from the viewer is traveling. Therefore, there is space with better visibility around the road where the vehicle 3B is traveling than around the road where the vehicle 3A is traveling. The NTN radio station 6 is illustrated in the sky above the mountain m1 in the distance.

The NTN radio station 6 is a communication satellite, a HAPS, etc., and is equipped with an NTN communication device 60. Communications satellites includes geosynchronous orbit (GSO) satellites and non-geosynchronous orbit (NGSO) satellites.

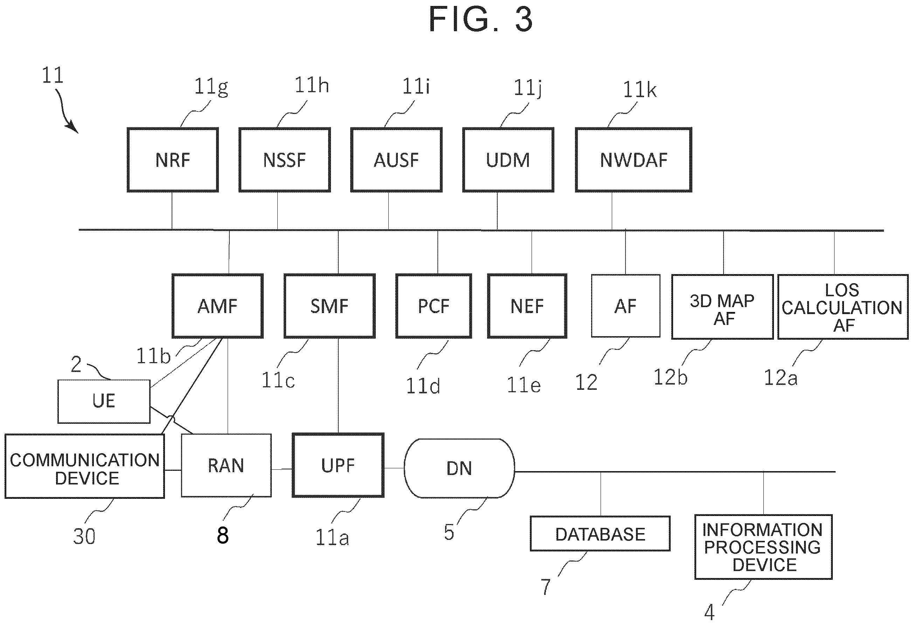

The NTN radio station 6 is connected to the communication device 30 or user equipment (UE) 2 (see FIG. 3) on the ground via a line called a service link. When the NTN radio station 6 is a GSO satellite, the service link can be provided by Earth-fixed beams of radio waves that always cover the same area. When the NTN radio station 6 is other than a GSO satellite, the service link can be provided by Quasi-Earth-fixed or Earth-moving beams of radio waves.

In the case of the Earth-moving beams of radio waves, cells in the NTN (hereinafter referred to as NTN cells) move on the ground as the NTN radio station 6 (such as an NGSO satellite) moves on its orbital plane. The NTN cell herein refers to a range of communication that is covered by one NTN radio station 6 at a certain point in time. In the case of the Quasi-Earth-fixed beams, a beam that is different depending on the period is stationary for a certain time in a given NTN cell on the ground. The cross section of each beam on the Earth's surface is called a footprint. The Quasi-Earth-fixed beams of radio waves may be formed by the NTN radio station 6 that generates steerable beams in order to fix footprints on the ground for a certain time period.

The NTN communication device 60 mounted on the NTN radio station 6 connects the communication device 30, UE 2, etc. on the ground to a mobile communication system such as a fifth generation (5G) core network (5GC). Each of the present and subsequent embodiments illustrates an example in which the communication system 100 is applied to a fifth generation mobile communication system. However, the communication system 100 in each of the present and subsequent embodiments may be applied to a fourth generation, fifth generation, or later mobile communication system.

The NTN communication device 60 connects the communication device 30, UE 2, etc. on the ground to the mobile communication system by transparent relay or regenerative relay. In transparent relay, the waveform of a relayed radio signal is not changed. In regenerative relay, on the other hand, demodulation, decoding, switching, routing, encoding, modulation, etc. of a radio signal are performed. Therefore, the NTN communication device 60 and NTN radio station 6 that perform regenerative relay can be said to be a communication satellite, HAPS, etc. equipped with all or part of the functions of a ground base station such as next Generation Node B (gNB).

The NTN communication device 60 is connected to an NTN gateway on the ground via a communication line called a feeder link. In transparent relay, the NTN gateway connects the NTN communication device 60 to a ground base station (such as gNB) of the mobile communication system. In regenerative relay, on the other hand, the NTN gateway may connect the NTN communication device 60 directly to the core network of the mobile communication system (5GC etc.) without via a ground base station (gNB etc.).

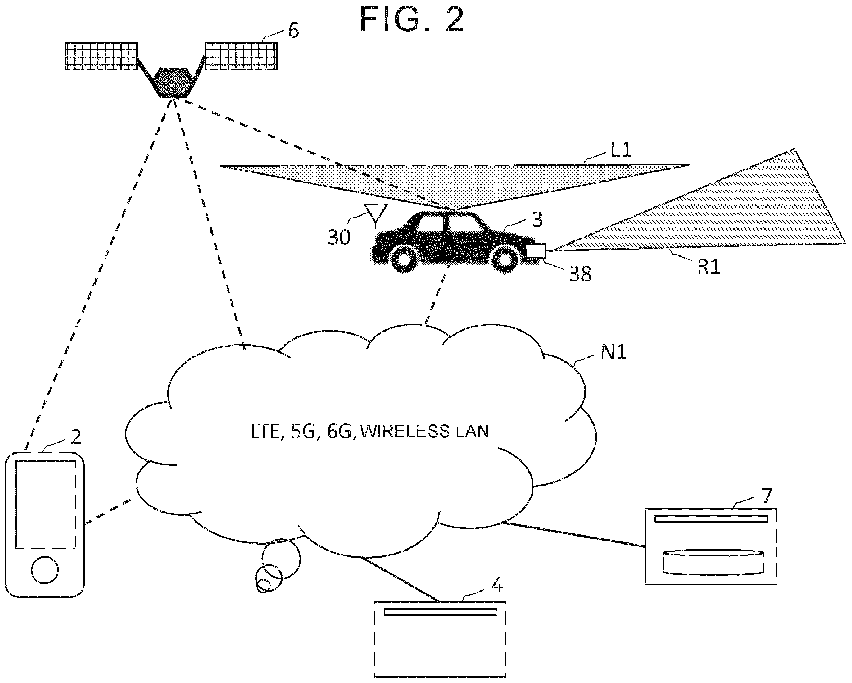

FIG. 2 illustrates the vehicle 3 equipped with the communication device 30 of the present embodiment and a group of devices related to the communication device 30. In FIG. 2, the UE 2, the information processing device 4, the database 7, and the NTN radio station 6 that are connected to the network N1 including the mobile communication system are illustrated as an example of the group of devices related to the communication device 30. Examples of the network N1 includes mobile communication systems such as Long-Term Evolution (LTE), a fifth generation mobile communication system (5G), and a sixth generation mobile communication system (6G), and a wireless local area network (LAN). For example, in FIG. 2, continuous lines indicate wired communication lines, and dashed lines indicate wireless communication lines.

The UE 2 is what is called a mobile terminal, a smartphone, etc. The UE 2 accesses the network N1 via a base station included in the network N1. The UE 2 may also access the network N1 via a communication line called a service link and the NTN radio station 6.

The communication device 30 has the same configuration as the UE 2 and performs the same processes as the UE 2. However, the communication device 30 is connected to the sensor 38 on the vehicle 3 (see FIG. 4). The communication device 30 detects the presence or absence of obstructions in the surrounding space on the movement route of the traveling vehicle 3 by the sensor 38. The communication device 30 acquires orbit information (ephemeris information) of the NTN radio station 6 from the network N1 via the NTN radio station 6, or directly from the network N1 without via the NTN radio station 6. The orbit information includes, for example, the time (date, hour, minute, second, epoch) and the location (X, Y, Z) and velocity (dX/dt, dY/dt, dZ/dt) in Earth-centered, Earth-fixed (ECEF) cartesian coordinates. The orbit information may be the coordinates and velocity in polar coordinates (phi, lambda, a, b) of a spheroid. In the polar coordinates, for example, a is the equatorial radius of the spheroid, b is the polar radius passing through both poles of the spheroid, phi is the latitude, and lambda is the longitude. Alternatively, the orbit information may be in true equator, mean equinox (TEME) coordinates.

The communication device 30 acquires the orbit information from the NTN radio station 6 or a base station of a radio access network connected to the network N1. For example, the communication device 30 can acquire the orbit information by a system information block (SIB) when the communication device 30 is connected to an LTE or 5G core network (5GC). The procedure by which the communication device 30 (and the UE 2) acquires the SIB from the 5GC is defined in 3GPP (registered trademark) 38.331. The communication device 30 may acquire, from the network N1, the orbit information of the NTN radio station 6 to which the communication device is currently connected and the orbit information of the NTN radio stations 6 that cover candidate NTN cells to which the communication device 30 is connected during a predetermined time ΔT.

In the present embodiment, the information processing device 4 operates as a server that manages the orbit information of all NTN radio stations 6 or a database that holds the information, and provides the orbit information of the NTN radio stations 6, like an Assisted Global Positioning System (A-GPS). Therefore, by making an inquiry to the information processing device 4, the communication device 30 can acquire the orbit information of the NTN radio stations 6 that cover the candidate NTN cells to which the communication device 30 is connected during the predetermined time ΔT. However, the server that manages the orbit information of all NTN radio stations 6 or the database that holds the information is not limited to the information processing device 4.

For example, a communication carrier that manages and provides the mobile communication system (see FIG. 3) included in the network N1 may connect the server that manages the orbit information of all NTN radio stations 6 or the database that holds the information to a Data Network (DN) 5. Alternatively, the server that manages the orbit information of all NTN radio stations 6 or the database that holds the information may be provided as an Application Function (AF) 12 in FIG. 3 so as to be accessible from the communication device 30. The orbit information of all NTN radio stations 6 may be provided as one of the functions of a Network Exposure Function (NEF) 11e in FIG. 3. Such provision of the orbit information may be defined as one of the functions of Network Functions (NFs) 11 such as the NEF 11e in 5G, 6G, or other communication standards. The communication device 30 thus inquires the information processing device 4 or another server or database about "NTN radio stations that are present near a designated point (current point, future point) during a time period before and after a certain time."

The communication device 30 identifies, based on obstructions on the route being traveled and the orbit information of the NTN radio stations 6, the range (line of sight (LOS)) in which radio waves are transmittable and receivable between the communication device 30 and the NTN radio station 6 on the movement route being traveled.

The communication device 30 is equipped with the sensor 38. The sensor 38 is, for example, a radar, a camera, or a receiver that detects electromagnetic waves emitted from the communication IF 33 (see FIG. 4) and reflected from obstructions. For example, the sensor 38 includes a laser irradiation device configured to scan a two-dimensional plane in front of the vehicle 3, and a photodetector. The sensor 38 detects obstructions in front of the vehicle 3 by scanning a two-dimensional plane in front of the vehicle 3 with a laser and receiving reflected light. The sensor 38 may be a three-dimensional millimeter wave radar that is a combination of a transmitter that emits a plurality of pencil beams ahead of the vehicle 3 and a receiver that receives reflected waves from ahead of the vehicle 3 in a gain pattern of the pencil beams. This transmitter may be the communication IF 33 (see FIG. 4) that connects to a base station of a radio access network. Therefore, the sensor 38 detects three-dimensional presence information regarding the range of presence of obstructions in front of and around the vehicle 3 on the movement route of the vehicle 3.

The sensor 38 may include a processor and a camera and may capture images of the area in front of the vehicle 3. The processor can perceive obstructions in front of the vehicle 3 from the images captured by the camera, and notify the communication device 30 of information such as the heights and depths of the obstructions as viewed from the vehicle 3.

The communication device 30 may acquire a three-dimensional (3D) MAP of the surroundings of the vehicle 3 from the database 7 connected to the network N1. The communication device 30 can add the presence information regarding the range of presence of obstructions detected by the sensor 38 to information of the 3D MAP acquired from the database 7 and identify the LOS.

The communication device 30 may predict the LOS during the predetermined time ΔT from a current time to a future time. For example, the communication device 30 can repeatedly update the information of the 3D MAP of the surroundings of the vehicle 3 and estimates the LOS, based on information such as the current location information, travel velocity, acceleration, direction of travel, and destination of the vehicle 3 and the information on obstructions detected by the sensor 38. The communication device 30 may transfer the information such as the current location information, travel velocity, acceleration, direction of travel, and destination of the vehicle 3 and the information on obstructions detected by the sensor 38 the sensor 38 to the information processing device 4, and request the information processing device 4 to calculate the LOS during the predetermined time ΔT from a current time to a future time.

The information processing device 4 provides a LOS calculation service to the communication device 30, the UE 2, etc. For example, the information processing device 4 receives, from the communication device 30 etc., a request to calculate the LOS during the predetermined time ΔT from a current time to a future time in the communication device 30, along with the information such as the current location information, travel velocity, acceleration, direction of travel, and destination of the vehicle 3 and the information on obstructions detected by the sensor 38. At this time, the information processing device 4 can acquire, from its own storage device 42, the orbit information of the NTN radio station 6 to which the communication device 30 is currently connected and the orbit information of the NTN radio stations 6 that cover candidate cells to which the communication device 30 and the UE 2 are connected during the predetermined time ΔT. As described above, the information processing device 4 may acquire the orbit information from a server, database, etc. connected to the DN 5 of the 5GC. Alternatively, the information processing device 4 may acquire the orbit information from a server, database, etc. provided as the AF 12 of the 5GC.

As described above, in the present embodiment, the information processing device 4 performs processing as a server that manages the orbit information of all NTN radio stations 6 or as a database that holds the information. Therefore, the information processing device 4 may be a server etc. that can respond to the communication device 30 with the "NTN radio stations that are present near a designated point (current point, future point) during a time period before and after the certain time" in response to the request from the communication device 30.

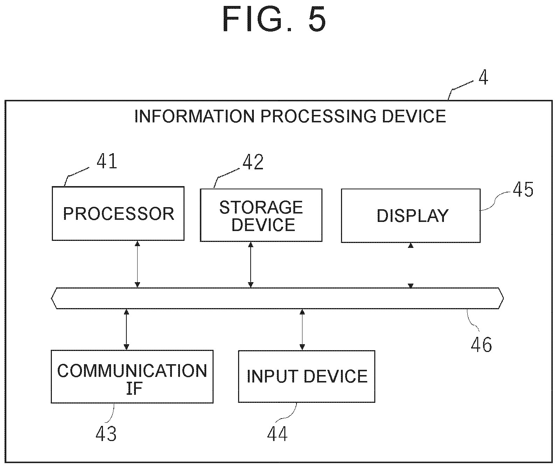

For example, the information processing device 4 may acquire, from the database 7, the 3D MAP of the movement route from the current location of the communication device 30 to a destination. The information processing device 4 may store the 3D MAP of the movement route of the communication device 30 in the storage device 42 (see FIG. 5) and read it from the storage device 42. For example, the information processing device 4 may be a computer connected to the DN 5 of the 5GC (see FIG. 3). Alternatively, the information processing device 4 may be the AF 12 of the 5GC (see FIG. 3).

The database 7 updates the information on the 3D MAP of the ground and provides the latest 3D MAP information to the communication device 30, the UE 2, etc. The 3D MAP is three-dimensional map information obtained by adding information on the vertical direction (height and depth directions) to two-dimensional map information. For example, the database 7 collects, from the communication device 30, UE 2, and other devices connected to the network N1, two-dimensional location information of these devices and three-dimensional information of the surroundings of the communication device 30, UE 2, etc. For example, the three-dimensional information may be information based on images captured by a camera mounted on the vehicle 3 or another moving object and a camera mounted on the UE 2. The database 7 constantly updates the 3D MAP information based on the collected images or three-dimensional information. The database 7 provides the current 3D MAP information to the communication device 30 and the UE 2 in response to requests from the communication device 30 and the UE 2 etc.

The database 7 stores in the storage device 42 (see FIG. 4) the 3D MAP information that does not change so much with time. The database 7 obtains the latest three-dimensional information of the surroundings of the UE 2 from the UE 2 etc. connected to the network N1 and updates the 3D MAP. For example, the database 7 acquires three-dimensional information such as the location, height, width, etc. of a newly constructed building from the UE 2 connected to the network N1. Such information can also be said to be real-time information. The UE 2 that provides real-time information can be said to be a device that performs sensing processing.

The database 7 can also be said to be a computer that accumulates information collected in the past by the device. For example, the database 7 may be a computer connected to the DN 5 of the 5GC (see FIG. 3). Alternatively, the database 7 may be the AF 12 of the 5GC (see FIG. 3).

FIG. 3 illustrates the configuration of a mobile communication system included in the network N1. FIG. 3 can also be said to be a diagram illustrating components of a fifth generation mobile communication system (also referred to as "5G network (NW)"). However, as mentioned above, the network N1 is not limited to the 5G network. The network N1 may be an LTE network or a network including a 6G or later mobile communication system. In FIG. 3, the UE 2 is a terminal of a user (subscriber). As illustrated in FIG. 4, the communication device 30 has the same configuration as the UE 2. A radio access network (RAN) 3 is an access network to a 5G core network (5GC). The RAN 8 is composed of base stations (gNBs).

The 5G network includes a 5G core network (5GC) and an access network ((R)AN). The UE 2, the DN 5, and the AF 12 are connected to the 5G network. The 5GC includes Network Functions (NFs) 11a to 11e, 11g to 11k shown by bold rectangles (hereinafter referred to as NFs 11a to 11k). Each of the NFs 11a to 11k is a function implemented by one or more computers executing a program. However, a single computer may implement two or more of the NFs 11a to 11k. In the present embodiment, the constituent elements of the 5GC are generally referred to as Network Functions (NFs) 11. The individual constituent elements of the 5GC are referred to as NEF 11e etc. In FIG. 3, each component is denoted by a general sign with an individual sign in parentheses.

As described above, the 5GC is a collection of components each having a predetermined function called NF 11. FIG. 3 illustrates the following components as the NFs 11 of the 5GC. The NFs 11 are shown by bold rectangles in FIG. 3.
User Plane Function (UPF) 11a
Access and Mobility Management Function (AMF) 11b
Session Management Function (SMF) 11c
Policy Control Function (PCF) 11d
Network Exposure Function (NEF) 11e
Network Repository Function (NRF) 11g
Network Slice Selection Function (NSSF) 11h
Authentication Server Function (AUSF) 11i
Unified Data Management (UDM) 11j
Network Data Analytics Function (NWDAF) 11k
In the present embodiment, user plane packets that are sent and received by the UE 2 are referred to as user packets. The UPF 11a performs routing and forwarding, inspection, and quality of service (QoS) handling of user packets. The AMF 11b is a serving device for the UE 2 in the 5GC. The AMF 11b accommodates the RAN 8 and performs subscriber authentication, location (mobility) management for the UE 2, etc.

The SMF 11c manages protocol data unit (PDU) sessions, and controls the UPF 11a in order to perform QoS control and policy control. A PDU session is a virtual communication channel for data transfer between the UE 2 and the DN 5. The DN 5 is a data network outside the 5GC (such as the Internet).

The PCF 11d cooperates with the SMF 11c to perform QoS control, policy control, charging control, etc. In the QoS control, the quality of communication such as priority packet forwarding is performed. In the policy control, communication control such as QoS, and packet forwarding handling, charging, etc. is performed based on network or subscriber information.

The NEF 11e serves to mediate communication between the AF 12 or a node outside the 5GC and the 3GPP (registered trademark) NFs 11. For example, the NEF 11e securely exposes the functions and events of the individual NFs 11 to third parties, the AF 12, edge computers, etc. The NEF 11e translates between internal information of the 5GC and external information. For example, the NEF 11e translates between information that is handled by the AF 12 and information that is handled by the individual NFs 11 of the 5GC. For example, the NEF 11e translates between a service identifier in the AF 12 and the internal information of the 5GC.

The AF 12 is an element that interacts with the 5GC to provide services to users, and is called, for example, an external application server. The AF 12 that is considered to be trusted by a 5G network operator is allowed to directly access its associated NFs 11 of the 5GC. The AF 12 that is not allowed to directly access its associated NFs 11 of the 5GC uses an interface exposed to the outside via the NEF 11e in order to access the Network Functions of the 5GC.

The NRF 11g stores and manages information on the NFs 11 (e.g. AMF 11b, SMF 11c, and UPF 11a) in the 5GC. In response to an inquiry about an NF 11 an inquirer wants to use, the NRF 11g can reply with a plurality of candidate NFs 11.

The NSSF 11h has a function to select a network slice to be used by a subscriber from among network slices generated by network slicing. The network slices are virtual networks having specifications that match their usages.

The AUSF 11i is a subscriber authentication server that performs subscriber authentication under the control of the AMF 11b. The UDM 11j holds or manages subscriber related information. The subscriber related information can be said to be an example of contract data. The contract data is, for example, information based on a contract between the user of the communication device 30 (UE 2) and a business operator that manages the mobile communication system (also referred to as operator or mobile network operator (MNO)). The UDM 11j provides the subscriber related information to each NF 11, or acquires, registers, deletes, and changes the status of the UE 2.

The NWDAF 11k has a function to collect data from each NF 11, an Operations, Administration, and Maintenance (OAM) terminal, etc. and analyze the data. The OAM terminal operates, administers, and maintains the network (5GC). That is, the NWDAF 11k is the NF 11 that provides network analysis information.

The DN 5 is a data network outside the communication system, such as the Internet. The DN 5 is connected to the communication network provided by the communication system (5GC) via one of the UPFs 11a. The UPFs 11a can have a multistage configuration. The UPF 11a in the last stage connected to the DN 5 is called a PDU Session Anchor User Plane Function (PSA UPF). The UPF 11a provided between the RAN 8 and the PSA UPF is called an Intermediary UPF (I-UPF).

In the example of FIG. 3, the information processing device 4 and the database 7 are connected to the DN 5. The information processing device 4 and the database 7 are described above with reference to FIG. 2. In FIG. 3, a LOS calculation AF 12a and a 3D MAP AF 12b are provided in parallel with the AF 12. The LOS calculation AF 12a, as the AF 12, calculates the LOS on the movement route of the user's device, i.e., the communication device 30, the UE 2, etc., and provides LOS information that is the calculation result to the communication device 30, the UE 2, etc. That is, the LOS calculation AF 12a provides the same processing as the information processing device 4. The 3D MAP AF 12b, as the AF 12, updates the 3D MAP and provides the updated 3D MAP to the communication device 30, the UE 2, the LOS calculation AF 12a, or the information processing device 4. That is, the 3D MAP AF 12b provides the same processing as the database 7.

### Configuration of Information Processing Device and Terminal

FIG. 4 illustrates an example of the configuration of the communication device 30. The communication device 30 is, for example, a device that is mounted on a moving object such as the vehicle 3 and accesses a mobile communication system, and has the same configuration as the UE 2. The communication device 30 includes a processor 31 as a processing unit or a control unit (controller), a storage device 32, the communication IF 33, the NTN communication unit 39, an input device 34, and a display 35. These components of the communication device 30 are connected to each other via a bus 36. The communication device 30 may be connected to the sensor 38 via an interface (I/F 37). As described above with reference to FIG. 2, the sensor 38 is, for example, a radar, a camera, etc. The communication device 30 may use a transmitter of the communication IF 33 as a substitute for a transmitter of the sensor 38.

The storage device 32 includes a main storage device and an auxiliary storage device. The main storage device is used as at least one of the following areas: a storage area for programs and data, an area for loading programs, a work area for programs, a buffer area for communication data, etc. The main storage device is a random access memory (RAM) or a combination of a RAM and a read-only memory (ROM). The auxiliary storage device is used as a storage area for data and programs. A nonvolatile storage medium is used as the auxiliary storage device. Examples of the nonvolatile storage medium include a hard disk, a solid state drive (SSD), a flash memory, and an electrically erasable programmable read-only memory (EEPROM). The storage device 32 may include a drive device for a disk storage medium.

The communication IF 33 is a circuit that performs communication processing. For example, the communication IF 33 is a transmitter and receiver that access a base station (gNB) of a mobile communication system such as 5GC. The communication IF 33 is, for example, a network interface card (NIC). The communication IF 33 may be a wireless communication circuit that performs wireless communication (such as 5G, wireless local area network (LAN) (Wi-Fi (registered trademark)), and Bluetooth (registered trademark) Low Energy (BLE)). The communication IF 33 may be a combination of a circuit that performs wired communication processing and a circuit that performs wireless communication processing. The NTN communication unit 39 is a transmitter and receiver that communicate with the NTN radio station 6 in the sky via a service link.

The input device 34 includes keys, buttons, a pointing device, a touch panel, etc., and is used to enter information. The display 35 is, for example, a liquid crystal display or an organic electro-luminescence (OEL) display. The display 35 displays information and data.

FIG. 5 illustrates the configuration of the information processing device 4. FIG. 5 can also be said to illustrate the configurations of the NFs 11a to 11k, AF 12, LOS calculation AF 12a, 3D MAP AF 12b, database 7, etc. The information processing device 4 can be a special-purpose or general-purpose computer such as a personal computer (PC), a workstation (WS), or a server machine. The information processing device 4 may be a collection (cloud) of one or more computers. The information processing device 4 includes a processor 41, a storage device 42, a communication interface 43 (communication IF 43), an input device 44, and a display 45. These components of the information processing device 4 are connected to each other via a bus 46. The processor 41, the storage device 42, the communication IF 43, the input device 44, and the display 45 may be the same as the processor 31, the storage device 32, the communication IF 33, the input device 34, and the display 35, respectively. Therefore, description of these components will be omitted.

The processors 31, 41 perform various processes by executing various programs stored in the storage devices 32, 42, respectively. Each of the processors 31, 41 is, for example, a central processing unit (CPU). The CPU is also called a microprocessor unit (MPU). Each of the processors 31, 41 may have a single processor configuration or a multiprocessor configuration. A single physical CPU connected by a single socket may have a multi-core configuration. Each of the processors 31, 41 may include an arithmetic device with various circuit configurations such as a digital signal processor (DSP) or a graphics processing unit (GPU). The processors 31, 41 may be configured to cooperate with at least one of the following circuits: an integrated circuit (IC), other digital circuits, analog circuits, etc. Examples of the integrated circuit include a large scale integration (LSI) circuit, an application-specific integrated circuit (ASIC), and a programmable logic device (PLD). Examples of the PLD include a field-programmable gate array (FPGA). Examples of the processors 31, 41 include a microcontroller (MCU), a system-on-a-chip (SoC), a system LSI, and a chipset.

### Process Example

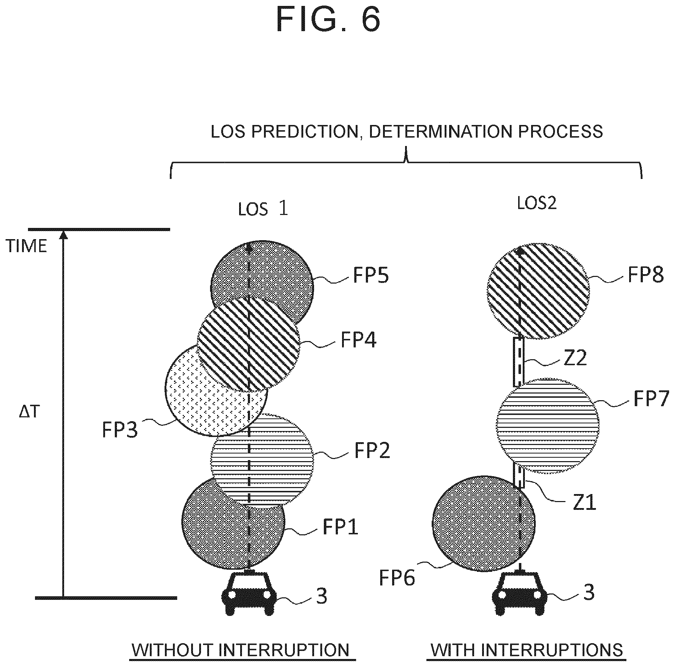

FIG. 6 illustrates a movement route for which the communication device 30 performs LOS prediction and an availability determination process. In FIG. 6, the cross sections of beams from the NTN radio station 6 on the ground on the movement route to be traveled by the vehicle 3 for the predetermined time ΔT are illustrated by footprints FP1 to FP8. The NTN radio station 6 may be, for example, a GSO satellite, an NGSO satellite, or a HAPS.

When the NTN radio station 6 is an NGSO satellite or a HAPS and provides an Earth-moving service link, the footprints FP1 to FP8 move on the ground as the NTN radio station 6 moves on the orbital plane. When the NTN radio station 6 is an NGSO satellite or a HAPS and provides a Quasi-Earth-fixed service link, the footprints FP1 to FP8 are stationary for a certain period of time in the NTN cells located at the individual points. On the other hand, when the NTN radio station 6 is a GSO satellite, the service link and the NTN cells are earth-fixed and always cover the same area.

For example, the communication device 30 repeatedly acquires, by an SIB, orbit information of the NTN radio station 6 on the movement route to be traveled for the predetermined time ΔT from the current location of the vehicle 3. As described above with reference to FIG. 2, the orbit information includes, for example, the time (date, hour, minute, second, epoch) and the location (X, Y, Z) and velocity (dX/dt, dY/dt, dZ/dt) in Earth-centered, Earth-fixed (ECEF) cartesian coordinates. The orbit information may be the coordinates and velocity in polar coordinates (phi, lambda, a, b) of a spheroid.

The communication device 30 repeatedly calculates the LOS on the movement route to be traveled for the predetermined time ΔT from the current location of the vehicle 3, or acquires the LOS from the information processing device 4. Therefore, the communication device 30 repeatedly identifies the footprints FP1 to FP8 reflecting the LOS on the movement route to be traveled for the predetermined time ΔT from the current location of the vehicle 3.

In the movement route shown by LOS1 on the left side of FIG. 6, the footprints FP1 to FP5 reflecting the LOS are all connected. That is, LOS1 is an example with no interruption. In the example of LOS1, the communication device 30 determines that the communication device 30 is connectable to the NTN radio station 6 without interruption on the movement route to be traveled for the predetermined time ΔT from the current location.

On the other hand, in the movement route shown by LOS2 on the right side of FIG. 6, there is an interruption point Z1 between the footprints FP6 and FP7. There is also an interruption point Z2 between the footprints FP7 and FP8. That is, LOS2 is an example with interruptions. In the example of LOS2, the communication device 30 determines connection to the NTN radio station 6 is interrupted at the interruption points Z1, Z2, etc. on the movement route to be traveled for the predetermined time ΔT from the current location. The communication device 30 continues communication with the network N1 by, for example, connecting to a ground base station immediately before reaching the interruption points Z1, Z2.

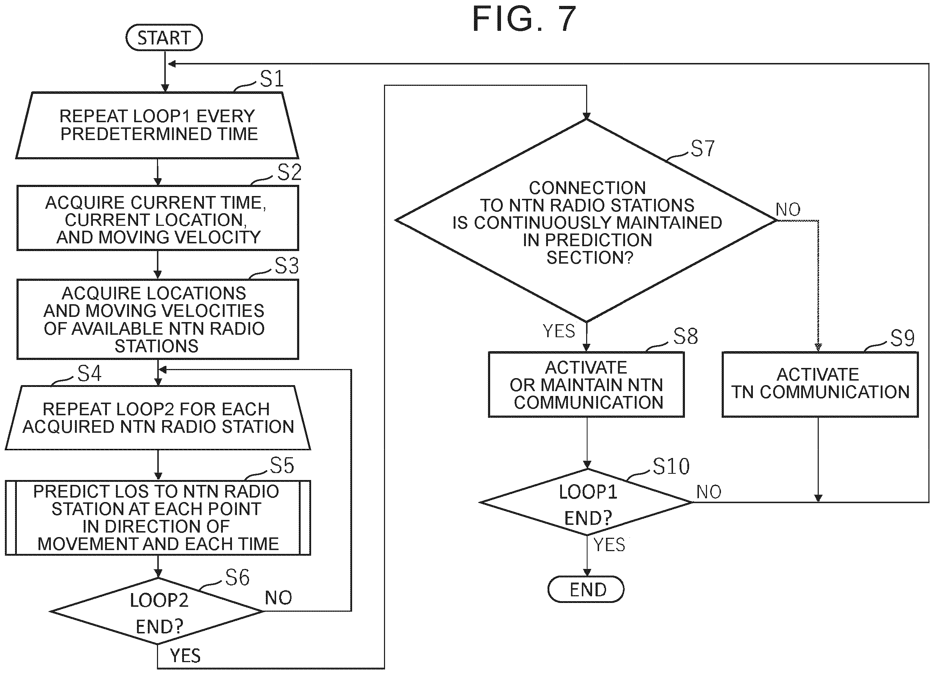

FIG. 7 is a flowchart illustrating a communication method that is performed by the communication device 30 mounted on the vehicle 3. For example, this process starts when the communication device 30 is turned on or the accessory power of the vehicle 3 is turned on. In this process, the communication device 30 performs a repetitive process of FIG. 7 every predetermined time ΔT (S1). The repetition that starts with S1 is called LOOP1.

In LOOP1, the communication device 30 acquires the current time, the current location of the vehicle 3, the moving velocity of the vehicle 3, etc. (S2). Next, the communication device 30 acquires the orbit information (locations and moving velocities) of the NTN radio stations 6 etc. that are available in the section that can be traveled for the predetermined time ΔT at the acquired moving velocity (S3). For example, the communication device 30 acquires the location and moving velocity of the NTN radio station 6 to which the communication device 30 is currently connected. When any other NTN radio station provides an NTN cell around the NTN cell provided by the NTN radio station 6 and on the movement route, the communication device 30 acquires the location and moving velocity of such an NTN radio station. The movement route means a route along which the vehicle 3 moves at the moving velocity acquired in S2 during the predetermined time ΔT. This movement route is a section where connection to the NTN radio station 6 etc. is predicted to be maintained, and is also called a prediction section. The NTN cells around the NTN cell provided by the NTN radio station 6 are, for example, NTN cells that are handover destinations for the NTN cell provided by the NTN radio station 6.

The NTN radio station 6 and the other NTN radio station described above provide NTN cells that are available on the movement route (prediction section) and are referred to as NTN radio stations 6 etc. In addition to the current locations and moving velocities of the NTN radio stations 6 etc., the communication device 30 may also acquire future projected locations and moving velocities of the NTN radio stations 6 etc. during the predetermined time ΔT that is the period during which LOOP1 is performed, from the information processing device 4 or another server or database on the network N1. As described above, the communication device 30 may acquire, from the network N1, the current locations of the NTN radio stations 6 etc. and the predicted projected locations of the NTN radio stations 6 etc. during the predetermined time ΔT that is the LOS prediction period, and store them in the storage device 32. Such orbit information of the NTN radio stations 6 etc. may be acquired via the NTN radio stations 6 or via a ground base station and a terrestrial network. The communication device 30 performs a repetitive process for each of the NTN radio stations 6 etc. whose orbit information has been acquired (S4). This repetition is called LOOP2.

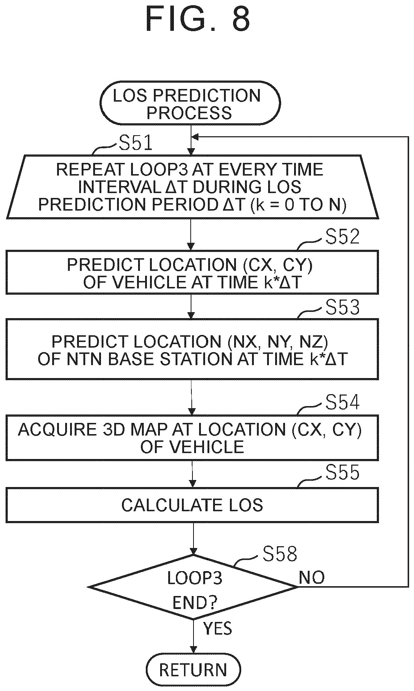

The communication device 30 predicts the LOS to the NTN radio station 6 for each point on the movement route (prediction section) in the direction of movement of the vehicle 3 and each time (S5). The process of S5 will be separately described in detail with reference to FIG. 8. The communication device 30 determines whether LOOP2 has ended (S6). That is, the communication device 30 determines whether LOOP2 has been performed for all the NTN radio stations 6 etc. When LOOP2 has not ended, the routine returns to the process to S4, and the communication device 30 continues LOOP2.

When LOOP2 has ended, the communication device 30 determines whether connection to the NTN radio stations 6 etc. is continuously maintained in the prediction section (S7). When connection to the NTN radio stations 6 etc. is continuously maintained in the prediction section, the communication device 30 activates or maintains NTN communication (S8). When connection to the NTN radio stations 6 etc. is not maintained in the prediction section, the communication device 30 activates terrestrial network (TN) communication such as cellular communication or wireless LAN communication (S9). In this example, the communication device 30 switches from NTN communication to TN communication.

The communication device 30 determines whether LOOP 1 has ended (S10). For example, LOOP1 ends when the communication device 30 is turned off or when the accessory power of the vehicle 3 is turned off. When LOOP1 has not ended, the routine returns to the process to S1, and the communication device 30 continues LOOP1. When the power etc. is off, the communication device 30 ends the process.

In the process of S9, the communication device 30 may use both TN communication and NTN communication. This is because connection to the NTN radio stations 6 etc. continues at least partially within the prediction section. Using both TN communication and NTN communication means that the communication device 30 maintains connection to the NTN radio stations 6 via the NTN communication unit 39, and the communication IF 33 that is a TN communication unit maintains connection to the ground base station. By using both TN communication and NTN communication, the communication device 30 can quickly switch to TN communication even if connection to the NTN radio stations 6 etc. is interrupted.

FIG. 8 is a flowchart illustrating the details of the LOS prediction process (S5 in FIG. 7). The communication device 30 performs a repetitive process at every time interval Δt (k = 0 to N) during the predetermined time ΔT that is an LOS prediction period (S51). The repetition at every time interval Δt is called LOOP3. The number of iterations, k = 0, corresponds to the current time, and ΔT = N*Δt. The time interval Δt is, for example, an amount of time long enough to follow a change in LOS that occurs as the vehicle 3 moves. Instead of performing the repetition at each time interval Δt, the communication device 30 may repeat the process of LOOP3 for each NTN cell that overlaps the movement route (prediction section) to be traveled for the predetermined time ΔT.

For example, in LOOP3, the communication device 30 predicts the location of the vehicle 3 at time k*ΔT (CX = CVx*Δt, CY = CVy*Δt) based on the velocity of the vehicle 3 (S52). In this example, (CVx, CVy) is the velocity of the vehicle 3. The origin (0, 0) of the location of the vehicle 3 is set to the current location. However, the communication device 30 may acquire information on the road conditions and traffic congestion conditions along the current movement route from a car navigation system etc. and correct the velocity of the vehicle 3.

The communication device 30 predicts the location (NX = NVx*Δt, NY = NVy*Δt, NZ = NVz*Δt) of the NTN radio station 6 etc. at time k*ΔT based on the current orbit information (time, location, velocity) of the NTN radio station 6 etc. (S53). In this example, (NVx, NVy, NVz) is the velocity of the NTN radio station 6 etc.

Instead of predicting the location of the NTN radio station 6 etc. in S53, the communication device 30 may read, from the storage device 32, the projected location of the NTN radio station 6 etc. during the predetermined time ΔT that has been acquired in advance in the process of S3 in FIG. 7. The orbit information (time, location, velocity) of the NTN radio station 6 etc. may be expressed in polar coordinates of and velocity in polar coordinates (phi, lambda, a, b) of a spheroid. The communication device 30 identifies the range of the NTN cell (or footprint) served by the beam of the NTN radio station 6 etc. at time k*ΔT.

The communication device 30 acquires the 3D MAP reflecting obstructions at the location (CX, CY) of the vehicle 3 (S54). For example, the communication device 30 acquires the 3D MAP at the location of the vehicle 3 at time k*ΔT from the database 7 via the network N1. When the communication device 30 acquires the current location of the vehicle 3 in the process of S2 in FIG. 7, the communication device 30 may acquire in advance from the database 7 the 3D MAP near the movement route (prediction section) to be traveled for the LOS prediction period ΔT. The communication device 30 may acquire real-time information to be added to the 3D MAP near the movement route (prediction section) from the UE 2 connected to the network N1. The communication device 30 may acquire real-time information to be added to the 3D MAP near the movement route (prediction section) from the UE 2 by a communication method called sidelink or New Radio Vehicle-to-Everything (NR-V2X) PC5. The communication device 30 may acquire real-time information to be added to the 3D MAP near the movement route (prediction section) from another vehicle connected to the network N1 or another vehicle connected by vehicle-to-vehicle communication. Vehicle-to-vehicle communication is, for example, sidelink or NR-V2X PC5. An example of the real-time information is the presence of a crane temporarily installed for building construction work. The UE 2 that provides real-time information can be said to be a device that performs sensing processing.

The communication device 30 detects the surroundings of the vehicle 3 and obstructions in front of the vehicle 3 corresponding to the location of the vehicle 3 at time k*ΔT (CX = CVx*Δt, CY = CVy*Δt) by using the sensor 38 mounted on the vehicle 3. As described above with reference to FIG. 2, the sensor 38 is, for example, a radar, a camera, or a receiver that detects electromagnetic waves emitted from the communication IF 33 and reflected from obstructions. That is, the communication device 30 acquires, via the sensor 38, presence information regarding the range of presence of obstructions in space including an outgoing or incoming direction of radio waves during communication via the NTN communication unit 39.

The communication device 30 adds the information acquired from the UE 2 connected to the network N1 and the presence information of obstructions detected by the sensor 38 to the 3D MAP acquired from the database 7. The order of S52, S53, and S54 is not limited, and any of these steps may be performed first. Alternatively, S52, S53 and S54 may be performed in parallel.

The communication device 30 calculates the LOS at time k*ΔT (S55). That is, the communication device 30 calculates a spatial communication line of sight from the 3D MAP acquired from the database 7, the information acquired from the UE 2, and the information on obstructions detected by the sensor 38. The communication device 30 reflects the location of the NTN radio station 6 etc. at time k*ΔT obtained in S53 in the spatial communication line of sight, and obtains the range of connection (LOS) with the NTN radio station 6 in the space above the vehicle 3. The range of connection can also be defined as the range in which radio waves are transmittable and receivable between the communication device 30 and the NTN radio station 6.

The communication device 30 reflects the LOS at the location on the movement route (prediction section) corresponding to each time k*ΔT in the NTN cells (or footprints) on the movement route. That is, the communication device 30 limits the NTN cells (or footprints) of NTN communication identified from the location of the NTN radio station 6 etc. to the range of the LOS defined by the presence of obstructions. The range of the LOS is, for example, the footprints FP1 to FP8 shown in FIG. 6.

The communication device 30 determines whether to end LOOP3, that is, whether the repetition (k = 0 to N) at each time interval Δt is completed (S58). When the repetition (k = 0 to N) is not completed, the routine returns to S51. When the repetition (k = 0 to N) is completed, the routine returns to the process of FIG. 7 (RETURN).

### Effects of Embodiment

As described above, according to the present embodiment, the communication device 30 includes the NTN communication unit 39 connectable to a non-terrestrial network, the sensor 38 as a sensor unit, and the processor 31 as a control unit, and the storage device 32.

The communication device 30 acquires, via the sensor 38, presence information regarding the range of presence of obstructions in space including an outgoing or incoming direction of radio waves during communication via the NTN communication unit 39. The communication device 30 identifies the LOS that is a spatial communication line of sight in which the communication device 30 is connectable to the NTN radio station 6 in the space above and in front of the vehicle 3, as estimated from the acquired presence information. The communication device 30 then performs a process based on the LOS. The process based on LOS is a process that minimizes interruption of communication with the communication device 30, and is, for example, the process from S7 to S9 in FIG. 7. That is, the communication device 30 can maintain communication with the network N1 as much as possible while performing communication via the NTN communication unit 39.

The communication device 30 is mounted on a moving object such as the vehicle 3. The communication device 30 estimates the LOS at every time interval Δt during the time section from a current time to a future time as the vehicle 3 etc. moves. The future time is the predetermined time ΔT from the current time. The communication device 30 performs either NTN communication or TN communication, or both, according to the estimated LOS. That is, the communication device 30 can maintain communication with the network N1 as much as possible while moving in the vehicle 3 etc.

The communication device 30 includes the communication IF 33 that is a TN communication unit connectable to a terrestrial network. The communication device 30 can receive in advance the location or predicted location information of the NTN radio station 6 in space via the terrestrial network. The communication device 30 then estimates the LOS by reflecting the received location or predicted location information of the NTN radio station 6. The communication device 30 can stably acquire the location or predicted location information of the NTN radio station 6 in space and estimate the LOS by using the terrestrial network together with the NTN communication.

The communication device 30 estimates the LOS based on the information acquired from the UE 2 that is a device that performs sensing processing, or the presence information acquired from the database 7 that accumulates information collected in the past by the UE 2. The LOS can thus be estimated based on the information that changes with time, in addition to the 3D MAP information (information in the database 7) that does not change so much with time. The information obtained from the UE 2 includes real-time information. That is, the communication device 30 can estimate the LOS based on the three-dimensional information that changes in real time, in addition to the 3D MAP information that is stored in the database 7 and that does not change so much with time.

The communication device 30 switches between communication via the NTN communication unit 39 and communication via the communication IF 33 serving as a TN communication unit, based on the estimation result. Accordingly, the communication device 30 can stably communicate with the network N1 via the NTN communication unit 39 and the TN communication unit (communication IF 33). The communication device 30 can achieve even more stable communication by using both communication via the NTN communication unit 39 and communication via the communication IF 33 serving as a TN communication unit. The communication device 30 can continuously maintain communication with the network N1 while determining in advance the quality, connectivity, availability, etc. of NTN communication.

The sensor 38 does not have to be a camera. Therefore, the vehicle 3 or the communication device 30 can acquire information to be added to the 3D MAP without being equipped with a camera. The communication device 30 can acquire information to be added to the 3D MAP without the sensor 38 by cooperating with another vehicle or the UE 2. However, whether the vehicle 3 is equipped with the sensor 38 or a camera can be determined based on the trade-off among processing time, estimation accuracy, communication quality, and cost.

### Second Embodiment

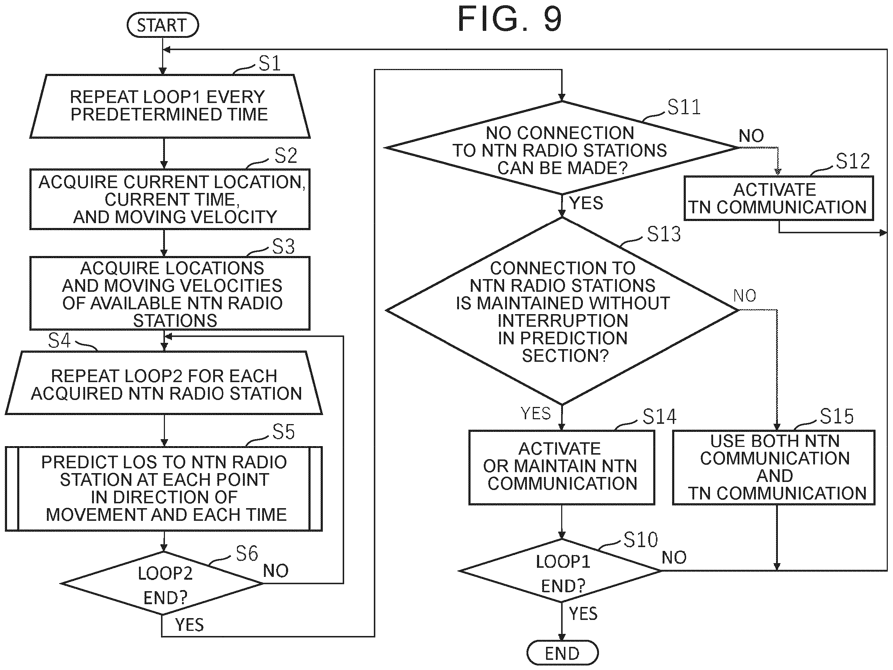

The communication device 30 according to a second embodiment will be described with reference to FIG. 9. In the first embodiment, the communication device 30 determines whether connection to the NTN radio stations 6 etc. is continuously maintained in the prediction section. When connection to the NTN radio stations 6 etc. is continuously maintained in the prediction section, the communication device 30 activates or maintains NTN communication. On the other hand, when connection to the NTN radio stations 6 etc. is not maintained in the prediction section, the communication device 30 activates TN communication such as cellular communication or wireless LAN communication. In this case, the communication device 30 uses both NTN communication and NT communication.

In the present embodiment, in addition to the above process, the communication device 30 determines a case where no connection to the NTN radio stations 6 etc. can be made in the prediction section. In the present embodiment, the same processes as those of the first embodiment are performed except for the case where no connection to the NTN radio stations 6 etc. can be made.

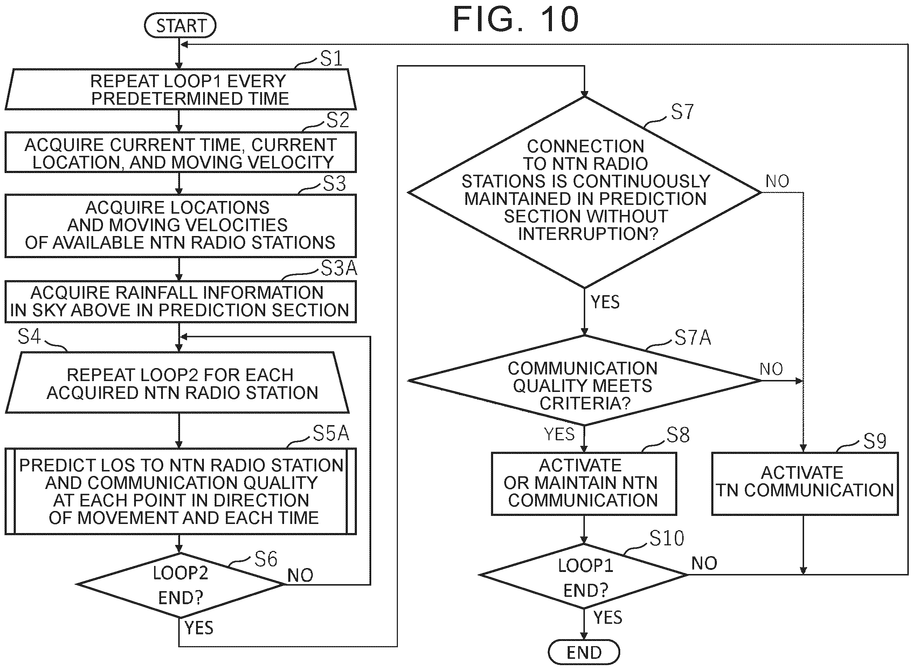

FIG. 9 is a flowchart illustrating a process of the communication device 30 of the second embodiment. Since S1 to S6 in FIG. 9 are the same as those in FIG. 7, description thereof will be omitted. In the present embodiment, after LOOP2 ends, the communication device 30 determines whether no connection to the NTN radio stations 6 etc. can be made in the prediction section (S11). When no connection to the NTN radio stations 6 etc. can be made in the prediction section (NO in S11), the communication device 30 activates TN communication (S12). When connection to the NTN radio stations 6 etc. can be made in the prediction section (YES in S11), the communication device 30 determines whether connection to the NTN radio station 6 will be maintained without interruption in the prediction section (S13). When connection to the NTN radio stations 6 etc. is maintained without interruption (YES in S13), the communication device 30 activates or maintains NTN communication (S14). When connection to the NTN radio stations 6 etc. is not maintained at least partially within the prediction section (NO in S13), the communication device 30 uses both TN communication such as cellular communication or wireless LAN communication and NTN communication (S15). Since S10 in FIG. 10 is the same as that in FIG. 7, description thereof will be omitted.

As described above, according to the present embodiment, the communication device 30 determines whether NTN communication is fully maintained without interruption, is partially maintained, or is not maintained at all in the prediction section. Therefore, the communication device 30 can respond early in the event that NTN communication is not fully maintained. The communication device 30 uses NTN communication as much as possible when the NTN communication is partially maintained, and can quickly switch to TN communication when NTN communication is interrupted. Like S9 in FIG. 7 of the first embodiment, S15 may simply be the process of activating TN communication.

### Third Embodiment

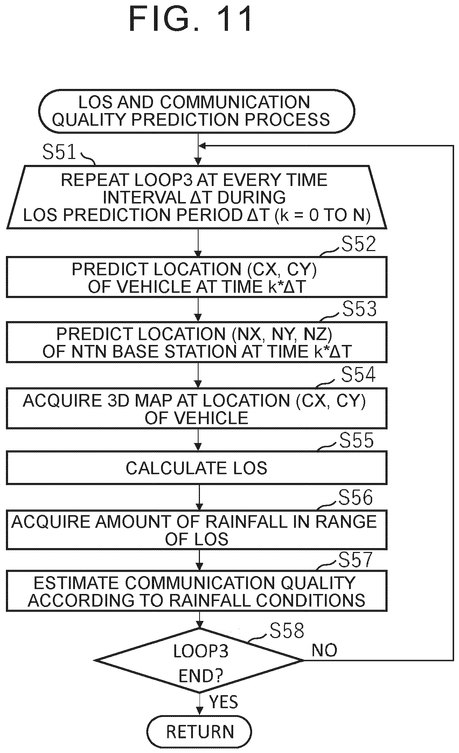

Hereinafter, the communication device 30 according to a third embodiment will be described with reference to FIGS. 10 and 11. In the first and second embodiments, the communication device 30 identifies the LOS that is the spatial communication line of sight in which the communication device 30 is connectable to the NTN radio station 6 in the space around and in front of the vehicle 3. The communication device 30 switches between NTN communication and TN communication, or uses both NTN communication and TN communication, depending on whether connection to the NTN radio stations 6 is maintained in the prediction section.

In the present embodiment, the sensor 38 mounted on the vehicle 3 detects rainfall etc. in the range of the LOS, and the communication device 30 estimates the communication quality in the range of the LOS based on the detection result. A process example will be described in which the communication device 30 switches between NTN communication and TN communication or uses both NTN communication and TN communication depending on the communication quality. The processes of the third embodiment are similar to those of the first and second embodiments except for the processes of detecting rainfall etc. in the range of the LOS, estimating the communication quality in the range of the LOS, and switching between NTN communication and TN communication or using both NTN communication and TN communication depending on the communication quality.

FIG. 10 is a flowchart illustrating the process of the communication device 30 of the third embodiment. Since S1 to S4, S6, and S7 in FIG. 10 are the same as those in FIG. 7 of the first embodiment, description thereof will be omitted. In the present embodiment, before proceeding to the repetitive process of LOOP2, the communication device 30 acquires rainfall information in the sky above in the prediction section (S3A). For example, the communication device 30 acquires the rainfall information from a ground base station or a weather server and the like (hereinafter referred to as weather server etc.) connected to the AF 12 or DN 5.

In the present embodiment, the base station and the weather server etc. connected to AF 12 or DN5 are connected to a radar-rain gauge via the network N1 to detect the rainfall conditions. The radar-rain gauge of the present embodiment radiates electromagnetic waves in the terahertz band, that is, far-infrared light with frequencies of approximately 100 GHz to 10 THz and wavelengths of approximately 3 mm to 30 micrometers, into space. The radar-rain gauge then detects clouds, raindrops, precipitation, etc. from reflection in the same manner as that of a normal precipitation radar. For example, the radar-rain gauge may be installed in a ground base station. The weather server etc. may acquire rainfall information from, for example, computers of public institutions such as the Ministry of Construction and the Japan Meteorological Agency, or computers of private weather forecasting companies.

The configuration of the radar-rain gauge or precipitation radar is described in, for example, "Structure and Operation of Radar-Rain Gauges" by Kazuhiko Fukami, River Technology Training 2022, Foundation of River & basin Integrated Communications (FRICS) (URL: http://www.river.or.jp/kougi2022_6.pdf, retrieved on October 15, 2023). However, the electromagnetic waves used in this document are from S-band (wavelength: 10 cm) to X-band (wavelength: 3 m). On the other hand, the radar-rain gauge of the present embodiment radiates pulsed electromagnetic waves in the terahertz band into space, and measures the raindrop size distribution and the amount of rainfall from the power value and phase of the electromagnetic waves backscattered by rain clouds, raindrops, etc., or from a change in polarization between the transmitted and received waves.

The weather server etc. divides the sky above the movement route of the vehicle 3 into predetermined blocks, and calculates the amount of rainfall per unit time for each mesh. A mesh is, for example, a rectangle of predetermined dimensions (e.g., a 1 km by 1 km rectangle to a 10 km by 10 km rectangle), and a reference point (e.g., the position of one corner) is specified by latitude and longitude. However, the weather server etc. may add vertical height information to the meshes. That is, the weather server etc. may measure the amount of rainfall within a given height range. The communication device 30 transfers the movement route from the current position of the vehicle 3 to the position to be reached the predetermined time ΔT after the current time, and acquires the amounts of rainfall in the meshes that overlap the movement route.

In LOOP2, the communication device 30 calculates the LOS to the NTN radio station 6 for each point in the direction of movement and each time, and also predicts the communication quality within the range of the LOS (S5A). The process of S5A will be separately described in detail with reference to FIG. 11.

When it is determined in S7 that connection to the NTN radio stations 6 etc. is continuously maintained in the prediction section, the communication device 30 determines whether the communication quality in the LOS meets criteria (S7A). The communication quality is determined based on whether a bit error rate estimated depending on the weather such as rainfall is higher than a reference value.

When the communication quality meets the criteria in the entire range of the LOS, the communication device 30 activates or maintains NTN communication (S8). When the communication quality does not meet the criteria in the prediction section, the communication device 30 activates TN communication such as cellular communication or wireless LAN communication (S9). In the process of S9, the communication device 30 may use both TN communication and NTN communication. Since S10 in FIG. 10 is the same as that in FIG. 7, description thereof will be omitted.

FIG. 11 is a flowchart illustrating the details of the LOS and communication quality prediction process (S5A in FIG. 10) of the present embodiment. Since S51 to S55 in the process of FIG. 11 are the same as those in FIG. 8 of the first embodiment, description thereof will be omitted.

In the present embodiment, after calculating the LOS, the communication device 30 acquires the amount of rainfall in the range of the LOS (S56). That is, the communication device 30 identifies the meshes included in the range of the LOS out of the meshes that overlap the prediction section on the movement route acquired in S5A of FIG. 10. The communication device 30 then estimates the communication quality in each mesh in the range of the LOS from the amounts of rainfall in the meshes included in the range of the LOS (S57).

For example, the communication device 30 has an attenuation value table that specifies the amount of attenuation of electromagnetic waves for the transmission and reception frequency and the amount of rainfall. The communication device 30 refers to the attenuation value table to acquire the presence or absence of rainfall or the amount of rainfall in the NTN cell (or footprint) with which the communication device 30 is currently communicating. The communication device 30 also acquires the presence or absence of rainfall or the amount of rainfall in each mesh that overlaps the prediction section. Based on the acquired amount of rainfall, the communication device 30 refers to the attenuation value table and identifies the communication quality in each mesh that overlaps the prediction section.

For example, the communication device 30 can assume that the communication quality Q0 measured in the NTN cell (or footprint) to which the communication device 30 is currently communicating reflects the amount of rainfall. The communication device 30 then obtains the difference ΔRxy between the amount of rainfall R0 in each mesh that overlaps the NTN cell with which the communication device 30 is currently communicating and the amount of rainfall Rxy in each mesh that overlaps each NTN cell in the prediction section. The communication device 30 can obtain the communication quality in each mesh that overlaps each NTN cell in the prediction section by correcting the current communication quality Q0 according to the difference Δ in amount of rainfall, and reflect the obtained communication quality in the communication quality in each NTN cell. For example, the communication device 30 stores the communication quality in the predicted section on the movement route in the storage device 32 etc. However, the communication device 30 may store, in the storage device 32 etc., the maximum, minimum, or average value etc. of the communication qualities in the meshes that overlap the prediction section as the communication quality of each NTN cell that overlaps the prediction section.

The communication device 30 may acquire the amount of rainfall in the entire prediction section on the movement route from the weather server etc., instead of acquiring the amount of rainfall in each mesh. That is, the communication device 30 may obtain an approximate value of the amount of rainfall and calculate the communication quality, assuming that the amount of rainfall in the entire prediction section on the travel route is constant with predetermined allowable accuracy. Since S58 in FIG. 11 is the same as that in FIG. 8, description thereof will be omitted.

As described above, the communication device 30 of the present embodiment estimates the LOS, namely the range in which radio waves are transmittable and receivable, based on the rainfall conditions in the space. Accordingly, the communication device 30 can estimate LOS based not only on the presence of obstructions, but also on the weather.

### Other Embodiments

The above embodiments are merely illustrative, and the present disclosure may be modified as appropriate without departing from the spirit and scope of the present disclosure. The processes and means described in the present disclosure can be combined as desired as long as no technical contradiction occurs.

The processes described as being performed by a single device may be performed in a distributed manner by a plurality of devices. The processes described as being performed by different devices may be performed by a single device. The hardware configuration (server configuration) that implements functions of a computer system can be flexibly changed.

The present disclosure can also be implemented by supplying computer programs implementing the functions described in the above embodiments to a computer and causing one or more processors of the computer to read and execute the computer programs. Such computer programs may be provided to the computer by a non-transitory computer-readable storage medium that is connectable to a system bus of the computer, or may be provided to the computer via a network. Examples of the non-transitory computer-readable storage medium include: any type of disk or disc such as a magnetic disk, a hard disk drive (HDD), and an optical disc (compact disc read-only memory (CD-ROM), digital versatile disc (DVD), Blu-ray disc, etc.); and any type of medium suitable for storing electronic instructions such as a read-only memory (ROM), a random access memory (RAM), an erasable programmable read-only memory (EPROM), an electrically erasable programmable read-only memory (EEPROM), a magnetic card, a flash memory, and an optical card.

## Claims

1. A communication device (30) comprising:
a non-terrestrial network communication unit (39) configured to connect to a non-terrestrial network;
a sensor unit (38); and
a control unit (31), wherein the control unit (31) is configured to
acquire, via the sensor unit (38), presence information regarding a range of presence of an obstruction in space including an outgoing or incoming direction of radio waves during communication via the non-terrestrial network communication unit (39), and
perform a process based on a line of sight in which the radio waves are transmittable and receivable between the non-terrestrial network communication unit (39) and the non-terrestrial network in the space, the line of sight being estimated from the acquired presence information.

2. The communication device (30) according to claim 1, wherein:
the communication device (30) is mounted on a moving object (3); and
the control unit (31) is configured to repeatedly estimate the line of sight in a time section from a current time to a future time as the moving object (3) moves, the future time being a predetermined amount of time from the current time.

3. The communication device (30) according to claim 1, further comprising a terrestrial network communication unit (33) configured to connect to a terrestrial network, wherein the control unit (31) is configured to receive location or predicted location information of a non-terrestrial network radio station (6) in the space in advance via the terrestrial network and estimate the line of sight by reflecting the location or predicted location information received in advance.

4. The communication device (30) according to claim 1, wherein the control unit (31) is configured to estimate the line of sight based on the presence information acquired from a device (2) that performs sensing processing or an information processing device (4) that accumulates information collected in a past by the device (2).

5. The communication device (30) according to claim 4, wherein the control unit (31) is configured to estimate the line of sight based on information acquired from the information processing device (4) and real-time information acquired from the device (2).

6. The communication device (30) according to claim 3, wherein the control unit (31) is configured to switch between the communication via the non-terrestrial network communication unit (39) and communication via the terrestrial network communication unit (33) based on the estimated line of sight.

7. The communication device (30) according to claim 3, wherein the control unit (31) is configured to use both the communication via the non-terrestrial network communication unit (39) and communication via the terrestrial network communication unit (33).

8. The communication device (30) according to claim 1, wherein the control unit (31) is configured to estimate the line of sight based on a rainfall condition in the space.

9. A communication method comprising:
acquiring, by a computer, presence information regarding a range of presence of an obstruction in space including an outgoing or incoming direction of radio waves during communication via a non-terrestrial network communication unit (39) configured to connect to a non-terrestrial network; and
performing, by the computer, a process based on a line of sight in which the radio waves are transmittable and receivable between the non-terrestrial network communication unit (39) and the non-terrestrial network in the space, the line of sight being estimated from the acquired presence information.

10. The communication method according to claim 9, wherein the non-terrestrial network communication unit (39) is mounted on a moving object (3),
the communication method further comprising repeatedly estimating, by the computer, the line of sight in a time section from a current time to a future time as the moving object (3) moves, the future time being a predetermined amount of time from the current time.

11. The communication method according to claim 9, further comprising:
receiving location or predicted location information of a non-terrestrial network radio station (6) in the space in advance via a terrestrial network; and
estimating the line of sight by reflecting the location or predicted location information received in advance.

12. The communication method according to claim 9, further comprising estimating the line of sight based on the presence information acquired from a device (2) that performs sensing processing or an information processing device (4) that accumulates information collected in a past by the device (2).

13. The communication method according to claim 12, wherein the estimating includes estimating the line of sight based on information acquired from the information processing device (4) and real-time information acquired from the device (2).

14. The communication method according to claim 11, further comprising switching between the communication via the non-terrestrial network communication unit (39) and communication via a terrestrial network communication unit (33) configured to connect to the terrestrial network, based on the estimated line of sight.

15. The communication method according to claim 11, further comprising using both the communication via the non-terrestrial network communication unit (39) and communication via a terrestrial network communication unit (33) configured to connect to the terrestrial network.
